# EUROPEAN PATENT APPLICATION

(11) **EP 4 593 184 A1**
(43) Date of publication of application: **30.07.2025**
(21) Application number: 24855201.0
(22) Date of filing: 16.01.2024
(51) Int. Cl.: H01M 50/358

(54) **BATTERY PACK AND ENERGY STORAGE SYSTEM**

(30) Priority: 18.08.2023 CN 202322239170 U
(71) Applicant: Huawei Digital Power Technologies Co., Ltd., Shenzhen, Guangdong 518043 (CN)
(72) Inventor: WU, Jian, Shenzhen, Guangdong 518043 (CN); LUO, Yingjie, Shenzhen, Guangdong 518043 (CN); MA, Pengcheng, Shenzhen, Guangdong 518043 (CN); JIANG, Rui, Shenzhen, Guangdong 518043 (CN); LUO, Wen, Shenzhen, Guangdong 518043 (CN)
(74) Representative: Gill Jennings & Every LLP
(86) International application number: PCT/CN2024/072633
(87) International publication number: WO 2025/039466

(57) **Abstract**

This application provides a battery pack, including a cell and a casing. There are a plurality of cells. An explosion-proof valve and a deflector cap are disposed on an outer wall of the casing, the deflector cap is fastened to the outer wall, a periphery of the explosion-proof valve is capped by the deflector cap, and the deflector cap is provided with one or more vents, where a range of an included angle A between an opening direction of at least one vent in the one or more vents and the outer wall is 0°≤A<90°. The deflector cap functions to slow down and cool down a high-temperature gas, dust, and electrolyte released from the battery pack, to prevent the released high-temperature gas from impacting a surrounding environment.

## Description

### CROSS-REFERENCE TO RELATED APPLICATION

This application claims priority to Chinese Patent Application No. 202322239170.2, filed with the China National Intellectual Property Administration on August 18, 2023 and entitled "BATTERY PACK AND ENERGY STORAGE SYSTEM", which is incorporated herein by reference in its entirety.

### TECHNICAL FIELD

This application relates to the field of energy storage technologies, and in particular, to a battery pack and an energy storage system.

### BACKGROUND

To resolve problems such as global climate change caused by use of fossil energy in huge amounts, every country is actively looking for clean energy for replacing fossil energy, and therefore equipment installation for wind power and photovoltaic power continues to increase. Power generation by using clean energy has drawbacks such as instability and disequilibrium, while electrochemical energy storage featuring high environmental adaptability, a high response speed, a high power, a high energy density, and the like is expected to become the main stream of energy storage in the future. In addition, there are higher requirements on performance of energy storage products in various aspects such as safety and a cycle life.

To be adapted to application scenarios of massive energy storage, generally, a plurality of single battery units are connected in series into a cell, and cells are combined into a battery pack. To ensure safety performance of the battery pack, generally, an explosion-proof valve is disposed on an outer wall of the battery pack. When thermal runaway occurs inside the battery pack, the explosion-proof valve is triggered to be opened to release a large amount of high-temperature and high-speed gas rapidly, which is prone to causing impacts or damage to people or things around, and leading to a safety accident.

### SUMMARY

This application provides a battery pack. A deflector cap is disposed on an explosion-proof valve and functions to slow down and cool down a high-temperature gas, dust, and electrolyte released from the battery pack when thermal runaway occurs, to prevent the high-temperature gas, the dust, and the electrolyte released from the battery pack when thermal runaway occurs from impacting a surrounding environment and ensure safety in the surrounding environment when thermal runaway occurs in the battery pack.

According to a first aspect, this application provides a battery pack. The battery pack includes a cell and a casing. There are a plurality of cells. An explosion-proof valve and a deflector cap are disposed on an outer wall of the casing, the deflector cap is fastened to the outer wall, a periphery of the explosion-proof valve is capped by the deflector cap, and the deflector cap is provided with one or more vents, where a range of an included angle A between an opening direction of at least one vent in the one or more vents and the outer wall is 0°≤A<90°. In other words, the opening direction of the at least one vent of the deflector cap is not perpendicular to the outer wall, or there is an angle of inclination between the opening direction of the at least one vent in the one or more vents and the outer wall. The opening direction of the vent is a direction perpendicular to a tangent plane on which a center point of the vent is located. When thermal runaway occurs in the battery pack and triggers the explosion-proof valve to be opened, a high-temperature gas, dust, and electrolyte in the battery pack are released from the explosion-proof valve into the deflector cap. A side wall of the deflector cap functions to resist the high-temperature gas, so that the high-temperature gas flows out of the vent of the deflector cap. As the included angle A between the at least one vent of the deflector cap and the outer wall is not a right angle, at least part of the gas is not directly blasted out in a direction perpendicular to the outer wall. A flow path of the gas is lengthened, and a blast direction of the gas is changed. In this way, the high-temperature gas is cooled down and slowed down, to prevent the high-temperature gas, the dust, and the electrolyte from impacting a surrounding environment of the battery pack.

In a possible implementation, an area of the one vent or a sum of areas of the plurality of vents is greater than or equal to a flow area after the explosion-proof valve is opened, and the flow area is an area for gas or liquid to flow through after the explosion-proof valve is opened. When there is one vent, an area of the vent is greater than or equal to the area for gas to flow through after the explosion-proof valve is opened. When there are a plurality of vents, a sum of areas of the plurality of vents is greater than or equal to the area for gas to flow through after the explosion-proof valve is opened. If the area of the vent or the sum of the areas of the plurality of vents is less than the flow area after the explosion-proof valve is opened, when thermal runaway occurs in the battery pack, the high-temperature gas, the dust, and the electrolyte released from the explosion-proof valve cannot be exhausted out in time from the vent of the deflector cap, and may turn into blockages inside the deflector cap, reducing a pressure relief effect of the explosion-proof valve. Therefore, to ensure the pressure relief effect of the explosion-proof valve, the area of the one vent or the sum of the areas of the plurality of vents should be greater than or equal to the flow area after the explosion-proof valve is opened.

In a possible implementation, the area of the vent is one to five times the flow area after the explosion-proof valve is opened. If the area of the vent of the deflector cap is less than the flow area after the explosion-proof valve is opened, the pressure relief effect of the explosion-proof valve is reduced. If the area of the vent of the deflector cap is excessively greater than the flow area after the explosion-proof valve is opened, an effect of the deflector cap for cooling down and slowing down the high-temperature gas, the dust, and the electrolyte is reduced. Therefore, the area of the vent may be one to five times the flow area after the explosion-proof valve is opened, to achieve a balance between an explosion-proof effect and the effect for cooling down and slowing down. In this way, the explosion-proof effect is ensured for the battery pack, and the effect of the deflector cap for cooling down and slowing down is also ensured.

In a possible implementation, the deflector cap includes a plurality of side walls. In other words, the deflector cap is a polyhedron. The at least one vent is provided on at least one side wall in the plurality of side walls. The deflector cap is a polyhedron, and can expand an internal space of the deflector cap and accommodate more high-temperature gas, dust, and electrolyte. In addition, a quantity and locations of vents are designed and selected with more flexibility. A vent may be provided on one surface, or vents may be provided on a plurality of surfaces. When there are a plurality of vents, the high-temperature gas, the dust, and the electrolyte are released from the battery pack through the plurality of vents for dispersing the high-temperature gas, the dust, and the electrolyte, to further enhance an effect of the deflector cap for cooling down and slowing down the high-temperature gas, the dust, and the electrolyte.

In a possible implementation, the deflector cap is fastened to the outer wall. The deflector cap is directly fastened to the outer wall of the battery pack, and a mounting process is simple. This can improve mechanical strength of the deflector cap fastened to the battery pack, prevent the high-speed gas blasted from the explosion-proof valve from breaking off the deflector cap, and enhance safety performance of the battery pack.

In a possible implementation, the deflector cap is fastened to the explosion-proof valve. The deflector cap is directly fastened to the explosion-proof valve. This can improve mechanical strength of the deflector cap, prevent the high-speed gas blasted from the explosion-proof valve from breaking off the deflector cap.

In a possible implementation, the deflector cap includes an opening, and the explosion-proof valve is capped by the deflector cap through the opening. The opening of the deflector cap faces the outer wall of the battery pack. The outer wall of the casing of the battery pack closes the opening of the deflector cap. When the deflector cap is mounted onto the outer wall of the casing of the battery pack, the outer wall of the casing of the battery pack is capped by the deflector cap directly through the opening, and then the deflector cap is fastened by welding, screw fastening, or the like. An assembly process is simple and efficient, so that assembly efficiency is improved.

In a possible implementation, there is an angle of inclination between the opening direction of the vent of the deflector cap and a direction of the opening of the deflector cap. With this design, the gas blasted from the explosion-proof valve flows from the opening to the vent. This can change a direction of the blasted-out high-temperature gas when thermal runaway occurs in the battery pack, lengthen a gas flowing path, and further enhance the effect for cooling down and slowing down the high-temperature gas, the dust, and the electrolyte.

In a possible implementation, the deflector cap includes one first side wall, one second side wall, and one third side wall, the first side wall, the second side wall, and the third side wall are sequentially connected, and the first side wall is opposite and spaced from the explosion-proof valve; and the third side wall is parallel to the outer wall, and the third side wall is fastened to the outer wall. A surface opposite the second side wall is the vent of the deflector cap, and a surface perpendicular to both the second side wall and the first side wall is the vent of the deflector cap. Because the first side wall is opposite the explosion-proof valve, the first side wall functions to resist the gas released from the explosion-proof valve, so that the high-temperature gas is released through another surface (the vent of the deflector cap), disperses the high-temperature gas, and prevents the gas from being blasted from a same direction. This prevents high temperature caused by the high-temperature gas that packs together and avoids impacts on the surrounding environment of the battery pack.

In a possible implementation, the deflector cap includes one first side wall, two second side walls, and two third side walls, the first side wall is opposite and spaced from the explosion-proof valve, the two second side walls are opposite each other, and both the two second side walls are connected to the first side wall; and the two third side walls are parallel to the outer wall, the two third side walls are connected to the two second side walls respectively, and both the two third side walls are fastened to the outer wall. An accommodation cavity is surrounded by the first side wall and the two second side walls to be formed, and part of the explosion-proof valve may be inside the accommodation cavity. The first side wall, the two second side walls, and the two third side walls are sequentially connected. The two third side walls are spaced from each other, and the spacing forms the opening of the deflector cap. A periphery of the explosion-proof valve is capped by the deflector cap through the opening, and the two third side walls are at peripheral sides of the explosion-proof valve. Two surfaces perpendicular to both the two second side walls and the first side wall form vents of the deflector cap. In other words, the deflector cap is provided with two vents, and areas of the vents may be adjusted and selected based on a distance between the first side wall and the explosion-proof valve. The deflector cap has a simple structure with low costs, and can improve safety performance of the battery pack at the low costs.

In a possible implementation, a direction along which the two second side walls are spaced from each other is perpendicular to a direction along which the first side wall is spaced from the explosion-proof valve.

In a possible implementation, the deflector cap includes one fourth side wall, the fourth side wall is connected to the first side wall, and the fourth side wall is connected to any one second side wall in the two second side walls. An accommodation cavity is surrounded by the first side wall, the two second side walls, and the fourth side wall to be formed. A surface opposite the fourth side wall forms the vent of the deflector cap, and an area of the vent may be adjusted and selected based on the distance between the first side wall and the explosion-proof valve. The deflector cap has a simple structure with low costs, and can improve safety performance of the battery pack at the low costs.

In a possible implementation, a length of the deflector cap in an extension direction of the outer wall is greater than or equal to a length of the explosion-proof valve in the extension direction of the outer wall. When the opening direction of the vent of the deflector cap is parallel to the outer wall (in other words, the included angle A between the opening direction of the vent and the outer wall is 0°), as the length of the deflector cap is greater than or equal to the length of the explosion-proof valve, a flow path of the high-temperature gas can be lengthened, to effectively reduce a temperature of the high-temperature gas and prevent impacts on the surrounding environment.

In a possible implementation, a projection, of the first side wall of the deflector cap, on the outer wall covers the explosion-proof valve. With this design, the first side wall can be in full contact with the gas blasted from the explosion-proof valve, and a resistance area and a resistance effect of the first side wall are improved, to prevent the gas from being blasted along the direction along which the first side wall is spaced from the explosion-proof valve and enhance the effect of the deflector cap for cooling down and slowing down.

In a possible implementation, the deflector cap includes two fourth side walls, the two fourth side walls are opposite each other, both the two fourth side walls are connected to the first side wall, and both the two fourth side walls are connected to the two second side walls; and the vent is provided on at least one side wall in the side walls of the deflector cap, where the side walls include the first side wall, the two second side walls, and the two fourth side walls. The accommodation cavity is surrounded by the first side wall, the two second side walls, and the two fourth side walls to be formed. The deflector cap is a hexahedral cavity, which can increase an accommodation space of the deflector cap. The opening of the deflector cap may be provided on one surface, and the periphery of the explosion-proof valve is capped by the deflector cap through the opening. The vent is provided on any one or more of the other five surfaces. When thermal runaway occurs in the battery pack, the explosion-proof valve is opened to release the high-temperature gas, the dust, and the electrolyte in the battery pack through the vent. A flowing direction of the high-temperature gas, the dust, and the electrolyte is controlled, and the effect of the deflector cap for cooling down and slowing down is further enhanced.

In a possible implementation, the two fourth side walls are parallel. The two fourth side walls may be opposite each other along a height direction of the battery pack, to resist the gas released from the explosion-proof valve, further enhance the effect of the deflector cap for cooling down and slowing down, and implement directional pressure relief.

In a possible implementation, there are angles of inclination between the two fourth side walls and the outer wall. The two fourth side walls are not perpendicular to the outer wall, but are on inclined planes, helping better control the flowing direction of the high-temperature gas and improve the effect of the deflector cap for cooling down and slowing down.

In a possible implementation, the two fourth side walls are perpendicular to the outer wall. The two fourth side walls are perpendicular to the outer wall of the casing of the battery pack. A structure design of the two fourth side walls is simple and can be implemented by diverse processes with low costs. This improves the effect of the deflector cap for cooling down and slowing down and reduces structural complexity of the battery pack.

In a possible implementation, the fourth side wall is perpendicular to the outer wall. Only one fourth side wall is disposed along the height direction of the battery pack, and a surface opposite the fourth side wall along the height direction of the battery pack is the vent of the deflector cap. The vent may face the ground or the sky. The fourth side wall, the first side wall, and the second side walls function to resist the high-temperature gas released from the battery pack, to control the high-temperature gas to flow through the vent, implement directional pressure relief. In addition, the gas released through the deflector cap is already cooled down and slowed down, causing no impacts on the surrounding environment.

In a possible implementation, the two second side walls are parallel. The two second side walls may be opposite each other along a width direction of the battery pack, to resist the gas released from the explosion-proof valve, further enhance the effect of the deflector cap for cooling down and slowing down, and implement directional pressure relief.

In a possible implementation, there are angles of inclination between the two second side walls and the outer wall. The two second side walls are not perpendicular to the outer wall, but are on inclined planes, helping better control the flowing direction of the high-temperature gas and improve the effect of the deflector cap for cooling down and slowing down.

In a possible implementation, the first side wall is parallel to the outer wall. When thermal runaway occurs in the battery pack, the high-temperature gas released from the battery pack is in direct contact with the first side wall, and the first side wall cools down and slows down the high-temperature gas, to prevent the high-temperature gas from directly blasting from a side surface of the battery pack and causing impacts on an environment around the side surface of the battery pack.

In a possible implementation, there are angles of inclination between the first side wall and the second side walls, so that the gas released from the battery pack is in direct contact with the two second side walls. The second side walls are on inclined planes relative to the first side wall, helping better control the flowing direction of the high-temperature gas and improve the effect of the deflector cap for cooling down and slowing down.

In a possible implementation, the two second side walls are perpendicular to the outer wall. The two second side walls are perpendicular to the outer wall of the casing of the battery pack. A structure design of the two second side walls is simple and can be implemented by diverse processes with low costs. This improves the effect of the deflector cap for cooling down and slowing down and reduces structural complexity of the battery pack.

In a possible implementation, the deflector cap is a hemispheroid, the hemispheroid includes one first side wall and two second side walls, the first side wall is connected to the two second side walls, the two second side walls are fastened to the outer wall, a surface of the first side wall is a cambered surface, and one or more vents are provided on the cambered surface. When the deflector cap is a hemispheroid, an internal space of the deflector cap can be increased, and a volume of the deflector cap for accommodating the high-temperature gas, the dust, and the electrolyte can be increased. This can further enhance the effect of the deflector cap for cooling down and slowing down the high-temperature gas, the dust, and the electrolyte, and improve safety performance of the battery pack.

In a possible implementation, an area of the at least one vent arranged from a center of the cambered surface to a periphery of the cambered surface gradually increases. In other words, an area of a vent at a center of the first side wall is the smallest, with least high-temperature gas, dust, and electrolyte passing through and slightest impacts on an environment directly opposite a side wall of the casing of the battery pack. In addition, a distributed arrangement of vents can disperse the high-speed gas, reduce a speed of the high-temperature gas, and further reduce an impact area of the high-temperature gas, to prevent impacts on the surrounding environment of the battery pack.

According to a second aspect, an embodiment of this application further provides an energy storage system. The energy storage system includes a plurality of battery packs described above, and the plurality of battery packs are stacked. The plurality of battery packs are assembled by stacking up, and any quantity of battery packs can be stacked one upon another based on an actual requirement, to increase or decrease a battery capacity and facilitate assembly.

With reference to a possible implementation of the second aspect, explosion-proof valves and deflector caps of the plurality of battery packs are all on a side surface of the energy storage apparatus, and when thermal runaway occurs in one of the battery packs, a high-temperature gas, dust, and electrolyte are released from the battery pack to a side surface of the battery pack, so that the thermal runaway does not spread to a battery pack adjacent to the battery pack, to ensure safety performance of the entire energy storage apparatus.

According to a third aspect, an embodiment of this application further provides a battery pack. The battery pack includes a casing and a plurality of cells inside the casing, an explosion-proof valve and a deflector cap are disposed on an outer wall of the casing, a periphery of the explosion-proof valve is capped by the deflector cap, the deflector cap includes one side wall opposite the outer wall of the casing, and one or more vents are provided on the side wall. When thermal runaway occurs in the battery pack, the explosion-proof valve is opened, and a gas in the battery pack is blasted into the deflector cap. The side wall of the deflector cap cools down and slows down the gas to some extent, and then the gas is blasted through the one or more vents. A blasting direction of the gas is changed, to prevent the high-temperature gas from impacting a surrounding environment of the battery pack.

### BRIEF DESCRIPTION OF DRAWINGS

FIG. 1 is a diagram of an application scenario of an energy storage system according to an embodiment;
FIG. 2 is a first diagram of a structure of a battery pack according to an embodiment of this application;
FIG. 3 is a diagram of a structure of a deflector cap of a battery pack according to an embodiment of this application;
FIG. 4 is a diagram of an included angle between an outer wall of a casing of a battery pack and an opening direction of a vent of a deflector cap according to an embodiment of this application;
FIG. 5 is a second diagram of a structure of a battery pack according to an embodiment of this application;
FIG. 6 is a left view of a battery pack according to an embodiment of this application;
FIG. 7 is a first sectional view of a battery pack in a z direction according to an embodiment of this application;
FIG. 8 is a diagram of a structure of an explosion-proof valve of a battery pack according to an embodiment of this application;
FIG. 9 is a second sectional view of a battery pack in a z direction according to an embodiment of this application;
FIG. 10 is a third sectional view of a battery pack in a z direction according to an embodiment of this application;
FIG. 11 is a fourth sectional view of a battery pack in a z direction according to an embodiment of this application;
FIG. 12 is a fifth sectional view of a battery pack in a z direction according to an embodiment of this application;
FIG. 13 is a sixth sectional view of a battery pack in a z direction according to an embodiment of this application;
FIG. 14 is a seventh sectional view of a battery pack in a z direction according to an embodiment of this application;
FIG. 15 is an eighth sectional view of a battery pack in a z direction according to an embodiment of this application;
FIG. 16 is a diagram of a structure of a hemispherical deflector cap of a battery pack according to an embodiment of this application;
FIG. 17 is a diagram of a spherical surface of a hemispherical deflector cap of a battery pack according to an embodiment of this application;
FIG. 18 is a ninth sectional view of a battery pack in a z direction according to an embodiment of this application;
FIG. 19 is a tenth sectional view of a battery pack in a z direction according to an embodiment of this application;
FIG. 20 is a diagram of testing a battery pack according to an embodiment of this application;
FIG. 21 is a diagram of testing a battery pack according to an embodiment of this application;
FIG. 22 is a diagram of a result of testing a battery pack with heating according to an embodiment of this application;
FIG. 23 is a diagram of a result of testing a battery pack with overcharging according to an embodiment of this application; and
FIG. 24 is a third diagram of a structure of a battery pack according to an embodiment of this application.

### Descriptions of reference numerals:

110: photovoltaic array; 120: power converter; 130: power grid; 140: external load; 150: energy storage apparatus; 200 (201, 202): battery pack; 210: cell; 220: casing; 221: outer wall of the casing; 230: explosion-proof valve; 231: top cover of the explosion-proof valve; 240: deflector cap; 241: first side wall; 242: second side wall; 243: third side wall; 244: fourth side wall; 245: vent; and 300: temperature sensor.

### DESCRIPTION OF EMBODIMENTS

To make objectives, technical solutions, and advantages of this application clearer, this application is further described below in detail with reference to the accompanying drawings. However, embodiments and implementations can be implemented in a plurality of forms, and should not be construed as a limitation on the implementations described herein. Identical reference numerals in the accompanying drawings denote identical or similar structures. Therefore, repeated description thereof is omitted. Expressions of locations and directions in embodiments of this application are described by using the accompanying drawings as an example. However, changes may further be made as required, and all the changes fall within the protection scope of this application. The accompanying drawings in embodiments of this application are merely used to show a relative position relationship and do not represent a real scale.

The terms "first" and "second" in embodiments of this application are merely intended for a purpose of description, and shall not be understood as an indication or implication of relative importance or implicit indication of a quantity of indicated technical features. Therefore, a feature limited by "first " or "second" may explicitly indicate or implicitly include one or more such features.

It should be noted that specific details are described in the following descriptions to facilitate understanding of this application. However, this application can be implemented in a plurality of manners different from those described herein, and a person skilled in the art can perform similar promotion without departing from the connotation of this application. Therefore, this application is not limited to the following disclosed specific implementations.

For ease of understanding, terms in embodiments of this application are first explained.

The term "and/or" describes only an association relationship for describing associated objects and represents that three relationships may exist. For example, A and/or B may represent the following three cases: Only A exists, both A and B exist, and only B exists.

"A plurality of" means two or more.

The term "connection" should be understood in a broad sense. For example, a "connection" may be a detachable connection, a nondetachable connection, may be a direct connection, or may be an indirect connection through an intermediary. "Fastened" should also be understood in a broad sense. For example, "fastened" may be directly fastened, or may be indirectly fastened through an intermediate medium.

Orientation terms mentioned in embodiments of this application, for example, "up", "down", "front", "back", "left", "right", "inner", "outer", " side", "top", and "bottom", are merely directions with reference to the accompanying drawings. Therefore, the orientation terms are used for better and clearer illustration and understanding of embodiments of this application, and do not explicitly or implicitly indicate that a specified apparatus or element needs to have a specific orientation or be constructed and operated in a specific orientation. Therefore, the orientation terms cannot be construed as a limitation on embodiments of this application.

A battery pack provided in embodiments of this application is described below with reference to the accompanying drawings in embodiments of this application.

The following embodiments of this application provide a battery pack. The battery pack may be used in application scenarios such as an energy storage system.

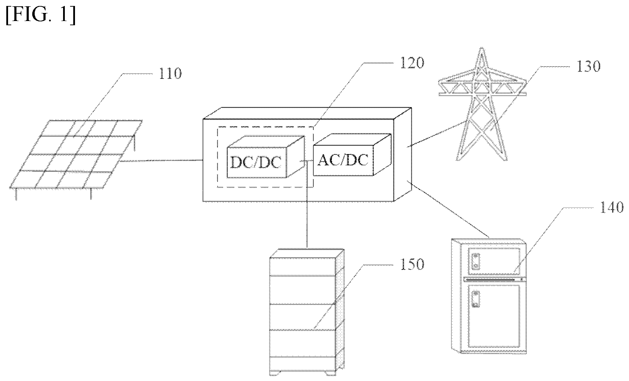

For example, FIG. 1 is a diagram of a framework structure of a photovoltaic system. As shown in FIG. 1, the photovoltaic system includes a photovoltaic array 110, a power converter 120, an energy storage apparatus 150, and a power grid 130/an external load 140. The power converter 120 may integrate a direct current/direct current (DC/DC) conversion circuit and a DC/AC conversion circuit. The energy storage apparatus 150 may be located between the DC/DC conversion circuit and the DC/AC conversion circuit. After electrical energy generated by the photovoltaic array 110 passes through the DC/DC conversion circuit for boost or buck conversion, the electrical energy may be used for charging the energy storage apparatus 120. When the electrical energy generated by the photovoltaic array 110 is insufficient for supplying power to the power grid 130/the external load 140, electrical energy stored in the energy storage apparatus 150 may be transmitted to the power grid 130/the external load 140 through the DC/AC conversion circuit in the power converter 120. In addition, the energy storage apparatus 150 may further receive power supply from the power grid 130. An alternating current output by the power grid 130 is converted, through the DC/AC conversion circuit, into a direct current, and a current obtained through conversion is transmitted to the energy storage apparatus 150, for charging the energy storage apparatus 150. Generally, to increase a battery capacity of the energy storage apparatus 150, a plurality of battery packs in the energy storage apparatus 150 are stacked. During use of a battery, there is an electrochemical reaction inside the battery when charging and discharging are repeated. A gas packs together and is released into the battery pack. As a result, a pressure inside the battery pack is higher than a pressure outside, and an explosion occurs when the pressure increases to a specific level, causing a safety accident.

To further improve safety performance of the battery pack, an explosion-proof valve may be disposed on an outer wall of a casing of the battery pack. In a household energy storage scenario, the plurality of battery packs in the energy storage apparatus 150 are generally stacked. To ensure safety performance of the energy storage apparatus 150, the explosion-proof valve is generally disposed on a side surface of the battery pack, and the energy storage apparatus 150 may be placed indoors. When thermal runaway occurs in the battery pack, the explosion-proof valve is opened, and a large amount of high-temperature gas, dust, and electrolyte are rapidly released, posing safety risks to a surrounding environment of the energy storage apparatus 150. According to experimental measurement, a temperature at a position 1 m away from the battery pack may reach 200 °C, and the released high-temperature gas, dust, and electrolyte may cause high temperature impacts on people around the energy storage apparatus 150, causing a safety accident. In addition, when the plurality of battery packs are stacked, if thermal runaway occurs in one of the battery packs, a large amount of released high-temperature gas, dust, and electrolyte may impact on an explosion-proof valve of an adjacent battery pack and damage the explosion-proof valve of another battery pack, and heat diffuses to the another battery pack.

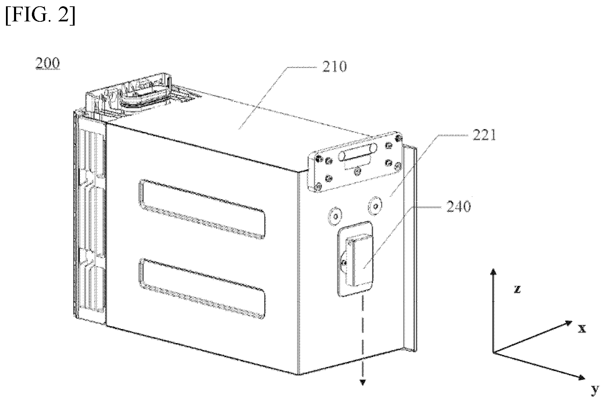

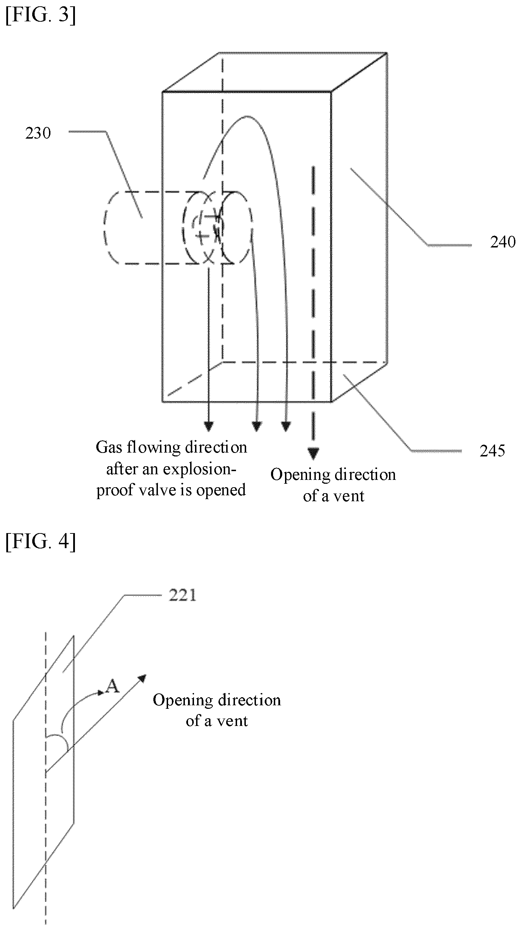

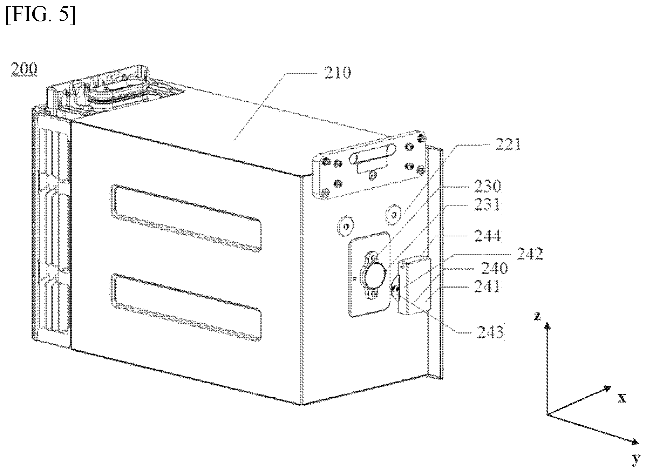

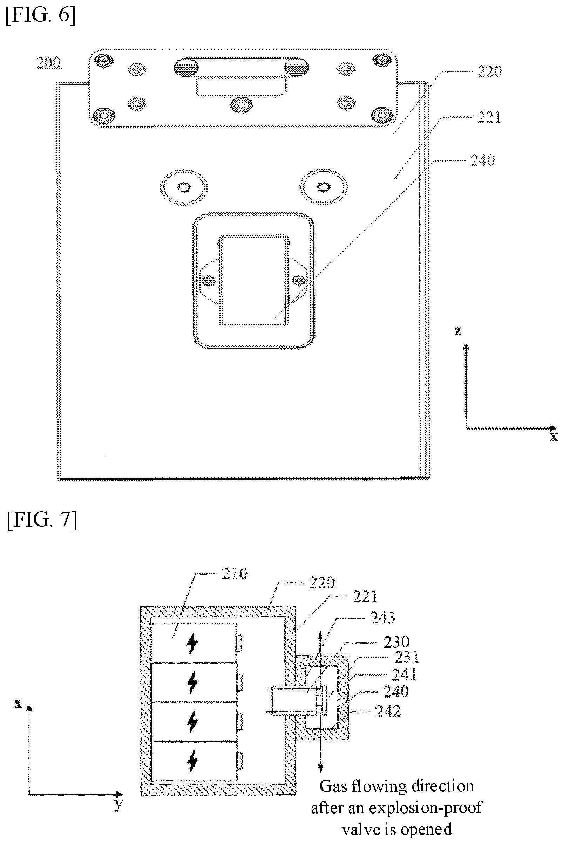

To prevent the high-temperature gas, the dust, and the electrolyte released when the explosion-proof valve 230 is opened from impacting on the surrounding people or environment, an embodiment of this application provides a battery pack 200. For a structure of the battery pack 200, refer to a diagram of the structure of the battery pack 200 shown in FIG. 2, an exploded view of the structure shown in FIG. 5, and a left view of the battery pack 200 shown in FIG. 6. The battery pack 200 includes a plurality of cells 210 and a casing 220. The plurality of cells are connected in series, in parallel, or in a hybrid manner (series-parallel), to increase a capacity of the battery pack 200 and meet a requirement for a large energy storage capacity. An explosion-proof valve 230 and a deflector cap 240 are disposed on an outer wall 221 of the casing 220. The explosion-proof valve 230 is interconnected to the inside of the casing 220. The deflector cap 240 is fastened to the outer wall 221, a periphery of the explosion-proof valve 230 is capped by the deflector cap 240, and the deflector cap 240 is provided with one or more vents, where a range of an included angle A, facing the explosion-proof valve, between an opening direction of at least one vent in the one or more vents and the outer wall is 0°≤A<90°. In other words, the opening direction of the at least one vent of the deflector cap is not perpendicular to the outer wall. The included angle between the opening direction of the vent and the side wall is a small angle. For details, refer to FIG. 4.

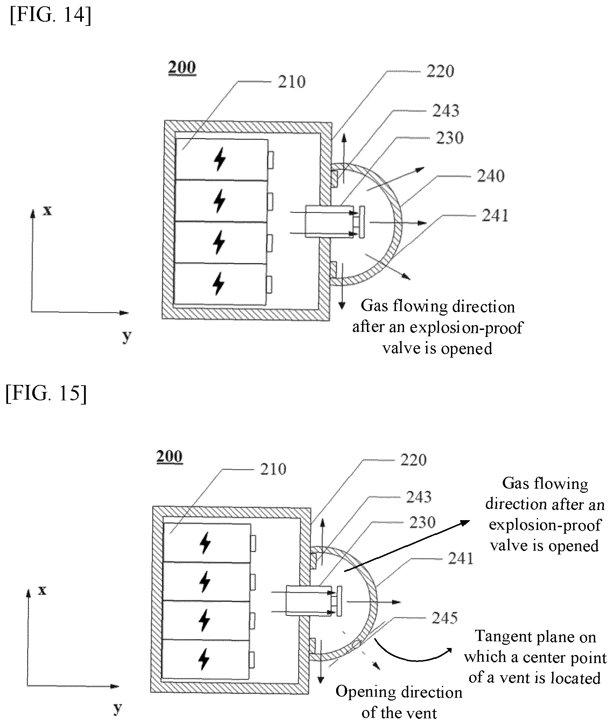

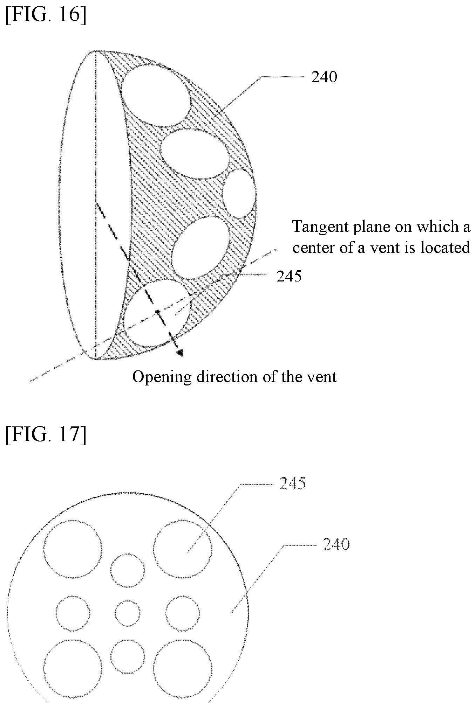

The opening direction of the vent 245 is a direction perpendicular to a tangent plane on which a center point of the vent 245 is located. For example, when the deflector cap 240 is a cuboid cavity, refer to the diagram of the structure of the battery pack 200 shown in FIG. 2 and a diagram of a structure of the deflector cap 240 shown in FIG. 3. In this example, the vent 245 of the deflector cap 240 is provided on a surface opposite the ground (not shown in the figure), and the opening direction of the vent 245 is facing down, as represented by a direction of a dashed arrow in FIG. 2 and FIG. 3. When the surface on which the vent 245 is located is a cambered surface, refer to sectional views of the battery pack 200 in a z direction shown in FIG. 14 and FIG. 15 and a diagram of a structure of a hemispherical deflector cap 240 shown in FIG. 16. In this example, a plurality of vents 245 are provided on a spherical surface of the deflector cap 240, and an opening direction of each vent 245 on the cambered surface is a direction perpendicular to a tangent plane on which a center of the vent 245 is located, that is, a direction of a dashed arrow in FIG. 14, FIG. 15, and FIG. 16.

When thermal runaway occurs in the battery pack 200 and triggers the explosion-proof valve 230 to be opened, a high-temperature gas, dust, and electrolyte in the battery pack 200 are released from the explosion-proof valve 230 into the deflector cap 240. A side wall of the deflector cap 240 functions to resist the high-temperature gas, so that the high-temperature gas flows out of the vent 245 of the deflector cap 240. As the opening direction of the at least one vent 245 of the deflector cap 240 is not perpendicular to the outer wall, at least part of the gas is not directly blasted out in a direction perpendicular to the outer wall. A flow path of the gas is lengthened, and a blast direction of the gas is changed. In this way, the high-temperature gas is cooled down and slowed down, to prevent the high-temperature gas, the dust, and the electrolyte from impacting a surrounding environment of the battery pack 200.

In some examples, an area of the vent 245 is greater than or equal to a flow area after the explosion-proof valve 230 is opened, and the flow area is an area for gas and/or liquid to flow through after the explosion-proof valve 230 is opened. The periphery of the explosion-proof valve 230 is capped by the deflector cap 240, to slow down and cool down the high-temperature gas, the dust, and the electrolyte released from the battery pack 200 to some extent. In addition, the deflector cap 240 can control the high-temperature gas, the dust, and the electrolyte to flow out of the vent 245 of the deflector cap 240, and control a flowing direction of the high-temperature gas, the dust, and the electrolyte as well as the high-temperature dust, to prevent impacts on people or an environment around the battery pack 200. If the area of the vent 245 of the deflector cap 240 is less than the flow area after the explosion-proof valve 230 is opened, the gas and the dust released after the explosion-proof valve 230 is opened pack together inside the deflector cap 240 and cannot be exhausted out in time, resulting in an explosion. Therefore, to ensure an explosion-proof effect of the explosion-proof valve 230, the area of the vent 245 of the deflector cap 240 needs to be greater than or equal to the area for gas to flow through after the explosion-proof valve 230 is opened, so that after the explosion-proof valve 230 is opened, the gas can be exhausted out of the battery pack 200 in time.

If the area of the vent is excessively greater than or equal to the area of the explosion-proof valve 230, an effect for cooling down and slowing down is reduced. Therefore, to ensure the effect of the deflector cap 240 for cooling down and slowing down the gas released after the explosion-proof valve 230 is opened, the area of the vent may be one to five times the flow area after the explosion-proof valve 230 is opened. For example, the area of the vent of the deflector cap 240 may be 1 time, 1.5 times, 2 times, 3 times, 3.5 times, 4 times, 4.5 times, 5 times, or the like the flow area after the explosion-proof valve 230 is opened.

There may be a plurality of options on a shape of the deflector cap 240 in this embodiment of this application. For example, the deflector cap 240 may be a regular polyhedron, for example, a cuboid, a cube, a pentahedron, or a hexahedron; may be an irregular polyhedron; or may have another shape, for example, a sphere or a cylinder.

In an embodiment, the deflector cap 240 includes an opening, and the explosion-proof valve 230 is capped by the deflector cap 240 through the opening. Then, the deflector cap is fastened through welding, screw fastening, or the like. An assembly process is simple and efficient, so that assembly efficiency is improved.

The deflector cap 240 may be directly fastened to the outer wall of the casing to implement mechanical fastening between the deflector cap 240 and the battery pack 200, or may be directly fastened to the explosion-proof valve 230 to implement mechanical fastening between the deflector cap 240 and the battery pack 200. This can improve mechanical strength of the deflector cap 240, prevent a high-speed gas blasted from the explosion-proof valve 230 from breaking off the deflector cap 240, and improve mechanical strength of the deflector cap 240. The deflector cap 240 may be connected to the outer wall 221 of the casing 220 or the explosion-proof valve in a plurality of manners, for example, by screw fastening, welding, hinge joint, and clamping.

The deflector cap 240 provided in this embodiment of this application may be a sheet metal component formed as one piece through a bending process, or may be a combined component formed by welding a plurality of sheet metal components.

A material of the deflector cap 240 provided in this embodiment of this application may be a high-strength metal that has strong temperature resistance, for example, aluminum, stainless steel, or sheet metal.

In an embodiment, the deflector cap 240 may be a cuboid cavity. As shown in FIG. 2, FIG. 5, and FIG. 6, the explosion-proof valve 230 and the deflector cap 240 are disposed on the outer wall 221 of the casing 220 of the battery pack 200, and the periphery of the explosion-proof valve 230 is capped by the deflector cap 240. As shown in a sectional view in FIG. 7 in the z direction in FIG. 2, the deflector cap 240 includes a first side wall 241, two second side walls 242, two third side walls 243, and two fourth side walls 244. The first side wall 241 is opposite and spaced from the explosion-proof valve 230 along a length direction (a y direction in FIG. 2) of the battery pack 200 along the explosion-proof valve 230. The two second side walls 242 are opposite each other along a width direction (an x direction in FIG. 2) of the battery pack 200 and are both connected to the first side wall 241. The two third side walls 243 are located on a same plane and connected to the second side walls 242, and both the two third side walls 243 are parallel to the first side wall 241. The two fourth side walls 244 are opposite each other along a height direction (the z direction in FIG. 2) of the battery pack 200. The two fourth side walls 244 are connected to the two second side walls 242, the first side wall 241, and the two third side walls 243. The two third side walls 243 are at peripheral sides of the explosion-proof valve 230. An accommodation cavity is surrounded by the first side wall 241, the two second side walls 242, the two fourth side walls 244, and the outer wall 221 of the casing 220 of the battery pack 200 to be formed. A part that is of the explosion-proof valve 230 and that protrudes from the outer wall 221 of the casing 220 of the battery pack 200 may be inside the accommodation cavity, and the two third side walls 243 are fastened to the outer wall 221 of the casing 220 of the battery pack 200. For example, a plurality of screw holes may be provided on the outer wall 221 at positions corresponding to the third side walls 243, and the deflector cap 240 is fastened to the outer wall 221 of the casing 220 by using screws; or the two third side walls 243 may be fastened to the outer wall 221 of the casing 220 of the battery pack 200 through a welding process. At least one vent may be provided on at least one side wall in the first side wall 241, the two second side walls 242, the two third side walls 243, and the two fourth side walls 244. When there is one vent, an area of the vent is greater than or equal to the area for gas to flow through after the explosion-proof valve 230 is opened. When there are a plurality of vents, a sum of areas of the plurality of vents is greater than or equal to the area for gas to flow through after the explosion-proof valve 230 is opened.

A type of the explosion-proof valve 230 is not specifically limited in this embodiment of this application. For example, for the explosion-proof valve 230, an explosion-proof plate of metal or plastic with scores may be an explosion-proof element, and when a specific pressure is reached, the explosion-proof plate is broken for pressure relief. The explosion-proof valve 230 may alternatively be a waterproof and permeable explosion-proof valve 230. A waterproof and permeable film is disposed in the explosion-proof valve 230. When the battery pack 200 is in a normal working state, a gas inside the casing 220 of the battery pack 200 is exchanged with air outside through the explosion-proof valve 230, to maintain pressure balance in the battery pack 200. The waterproof and permeable film can prevent dust and water drops from entering the battery pack 200. When a pressure in the battery pack 200 is excessively high because thermal runaway occurs in the battery pack 200, the explosion-proof valve 230 is in an open state, to rapidly exhaust out the gas from the battery pack 200 and achieve an explosion-proof effect. The explosion-proof valve 230 may alternatively be a spring-style explosion-proof valve 230 that includes a valve body, an elastic component, and a protective cover. When a pressure in the battery pack 200 rises sharply, the elastic component pushes the protective cover open, and the explosion-proof valve 230 is opened for rapid pressure relief.

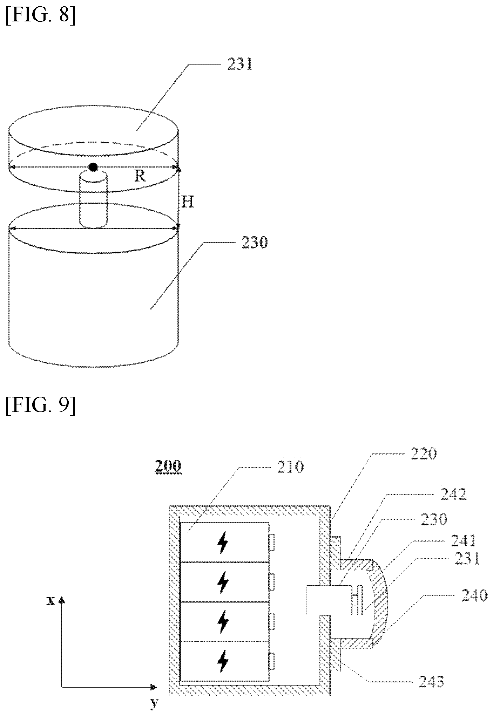

FIG. 8 is a brief diagram of a spring-style cylindrical explosion-proof valve 230 after being opened. When thermal runaway occurs in the battery pack 200, a top cover 231 of the explosion-proof valve 230 is pushed up by a spring, and therefore there is a gap between the top cover 231 and the valve body of the explosion-proof valve 230. The gas in the battery pack 200 is released through the gap to the outside. The flow area after the explosion-proof valve 230 is opened is an area of the gap, that is, S=2 π *R*H, where S is the flow area after the explosion-proof valve 230 is opened, R is a radius of a bottom surface of the valve body of the explosion-proof valve 230, and H is a distance between the top cover 231 and a top surface of the valve body after the explosion-proof valve 230 is opened.

It should be understood that the two third side walls 243 may extend along the z direction, or may extend in an opposite direction of the z direction, as shown in sectional views of the battery pack 200 in the z direction shown in FIG. 9 and FIG. 7 respectively. If the deflector cap 240 is a sheet metal formed through a bending process, the two third side walls 243 may be bent toward the inside of the cavity of the deflector cap 240, or may be bent toward the outside of the cavity of the deflector cap 240.

In addition, a surface of the first side wall 241 may be a plane surface, or may be a cambered surface. For a structure of the first side wall 241, refer to the sectional view of the battery pack 200 in the z direction shown in FIG. 9.

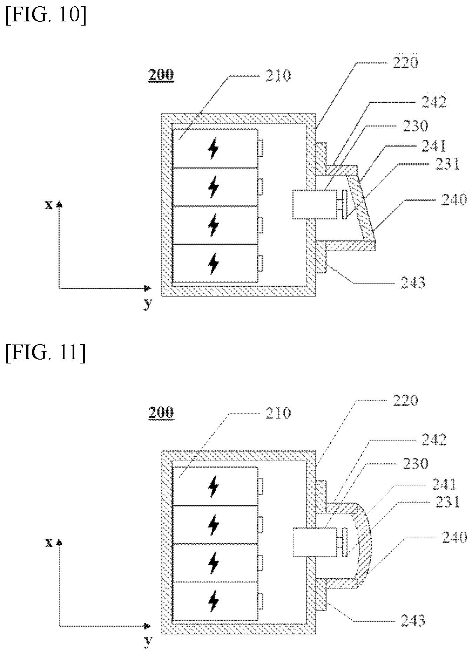

When the deflector cap 240 is a cuboid cavity, the first side wall 241 may be parallel to the outer wall 221 of the battery pack 200, or there may be an angle of inclination between the first side wall 241 and the outer wall 221 of the battery pack 200 (that is, inclination along the y direction away from the battery pack 200), to enhance a deflecting effect, so that a blasting direction of a gas or electrolyte blasted from the explosion-proof valve 230 can be changed more smoothly. For example, an included angle, facing the explosion-proof valve 230, between the first side wall 241 and the outer wall 221 of the battery pack 200 is an acute angle, that is, has an inclination, as shown in a sectional view of the battery pack 200 in the z direction shown in FIG. 10. An angle of inclination of the first side wall 241 is not limited in this embodiment of this application.

In addition, a length of the deflector cap 240 in an extension direction of the outer wall is greater than or equal to a length of the explosion-proof valve 230 in the extension direction of the outer wall. When the opening direction of the vent of the deflector cap 240 is parallel to the outer wall (in other words, the included angle A between the opening direction of the vent and the outer wall is 0°), as the length of the deflector cap 240 is greater than or equal to the length of the explosion-proof valve 230, a flow path of the high-temperature gas can be lengthened, to effectively reduce a temperature of the high-temperature gas and prevent impacts on the surrounding environment. A projection, of the first side wall 241 of the deflector cap 240, on the outer wall covers the explosion-proof valve 230. With this design, the first side wall 241 can be in full contact with the gas blasted from the explosion-proof valve 230, and a resistance area and a resistance effect of the first side wall 241 are improved, to prevent the gas from being blasted along the direction along which the first side wall 241 is spaced from the explosion-proof valve 230 and enhance the effect of the deflector cap 240 for cooling down and slowing down.

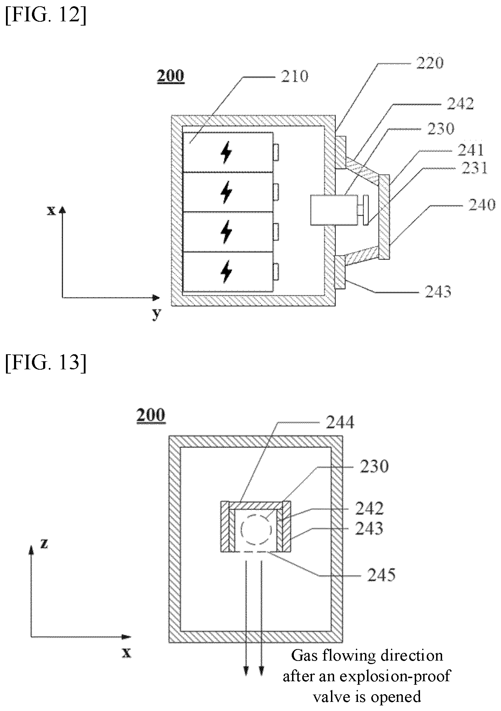

Similarly, the second side walls 242 may be perpendicular to the outer wall 221 of the casing 220 of the battery pack 200, as shown in sectional views of the battery pack 200 in the z direction shown in FIG. 9 to FIG. 11. Alternatively, the second side wall 242 may not be perpendicular to the outer wall 221 of the casing 220 of the battery pack 200, as shown in a diagram of a structure of the battery pack 200 shown in FIG. 12, and an included angle between each second side wall 242 and the outer wall 221 of the casing 220 of the battery pack 200 is an acute angle. Clearly, an angle between each second side wall 242 and a side wall of the casing 220 of the battery pack 200 may be an acute angle. In addition, the two second side walls 242 may be parallel to each other, and both the two second side walls 242 are perpendicular to the side wall of the casing 220. Alternatively, the two second side walls 242 are parallel to each other, and there is an angle of inclination between each of the two second side walls 242 and the side wall of the casing 220. For example, both the two second side walls 242 are inclined along the z direction, or both the two second side walls 242 are inclined along the opposite direction of the z direction. Alternatively, as shown in the sectional view of the battery pack 200 in the z direction shown in FIG. 12, both the two second side walls 242 inclines toward the explosion-proof valve 230. Therefore, the cavity of the deflector cap 240 has a plurality of shapes. This is not limited in this application.

Inclination directions of the first side wall 241 and the two second side walls 242 are controlled, to better control the blasting direction of a high-temperature gas, improve the effect of the deflector cap 240 for cooling down and slowing down, and implement directional pressure relief based on an actual requirement.

A quantity and shapes of vents of the deflector cap 240 may have various designs and options. A shape of the vent may be a circle, a polygon, or the like, to increase a ventilation area of the deflector cap 240. Any side wall of the deflector cap 240 may be used as the vent, or the vent may be provided on the side wall of the deflector cap 240.

For example, as shown in the sectional view of the battery pack 200 in the z direction shown in FIG. 7, vents (not shown in the figure) may be provided on both or one of the two second side walls 242. When thermal runaway occurs in the battery pack 200, the high-temperature gas, the dust, the electrolyte, and the like inside are released to the outside of the casing 220 of the battery pack 200 along a direction of an arrow in FIG. 7. As the vents are provided on the two second side walls 242, the first side wall 241 and the two fourth side walls 244 may function to resist the high-temperature gas, the dust, the electrolyte, and the dust to some extent, to reduce a temperature and a flow rate of the gas released from the battery pack 200 and control the high-temperature gas, the dust, and the electrolyte to flow out through the vents on the second side walls 242, so that a flowing direction of the high-temperature gas, the dust, and the electrolyte in the battery pack 200 is controlled, preventing the flowing direction of the gas released from the battery pack 200 from being excessively dispersed and causing impacts on an environment or people around the battery pack 200.

It can be understood that, to further enhance the effect of the deflector cap 240 for cooling down and slowing down, the vents may be provided only on the second side walls 242, and the other side walls of the deflector cap 240 function to resist the high-temperature gas, the dust, and the electrolyte and control all the high-temperature gas, the dust, and the electrolyte released from the battery pack 200 due to thermal runaway to flow out of the vents.

Similarly, vents may be provided on each of the two fourth side walls 244, or a vent is provided only on one of the second side walls 242.

Similarly, the deflector cap 240 may include only one first side wall 241, one second side wall 242, and two third side walls 243, and may not include a fourth side wall 244. The first side wall 241, the second side wall 242, and the third side wall 243 are sequentially connected, and the first side wall 241 is opposite and spaced from the explosion-proof valve 230. One third side wall 243 is parallel to the outer wall, and the other third side wall 243 is fastened to the outer wall. A surface opposite the second side wall 242 is the vent of the deflector cap 240, and a surface perpendicular to both the second side wall 242 and the first side wall 241 is the vent of the deflector cap 240. Because the first side wall 241 is opposite the explosion-proof valve 230, the first side wall 241 functions to resist the gas released from the explosion-proof valve 230, so that the high-temperature gas is released through another surface (the vent of the deflector cap 240), disperses the high-temperature gas, and prevents the gas from being blasted from a same direction. This prevents high temperature caused by a high-temperature gas that packs together and avoids impacts on the surrounding environment of the battery pack 200.

Similarly, the deflector cap 240 may include only a first side wall 241, two second side walls 242, and two third side walls 243, and may not include a fourth side wall 244 or include only one fourth side wall 244. As shown in a diagram of the structure of the battery pack 200 shown in FIG. 2 and a sectional view of the battery pack 200 in the y direction shown in FIG. 13, the deflector cap 240 on the battery pack 200 shown in the figure includes only a first side wall (not shown in the figure), two second side walls 242, two third side walls 243, and one fourth side wall 244. The fourth side wall 244 is above the first side wall 241, the two second side walls 242, and the two third side walls 243, and is connected to the first side wall 241, the two second side walls 242, and the two third side walls 243. The two third side walls 243 are configured to fix the deflector cap 240 to the outer wall 221 of the casing 220 of the battery pack 200. A surface opposite the fourth side wall 244 is the vent of the deflector cap 240, and the vent faces the ground. When thermal runaway occurs in the battery pack 200, the side wall of the deflector cap 240 functions to resist and cool down the gas. The high-temperature gas, the dust, and the electrolyte are released through the vent, and a flowing direction of the high-temperature gas, the dust, and the electrolyte is a direction of an arrow in FIG. 13. In other words, the high-temperature gas, the dust, and the electrolyte are released toward the ground to prevent the high-temperature gas, the dust, and the electrolyte from impacting on the surrounding environment and people, implementing directional pressure relief.

It should be understood that the two fourth side walls 244 may be parallel. There may alternatively be an angle of inclination between the two fourth side walls 244 and the outer wall 221. In other words, the two fourth side walls 244 are not perpendicular to the outer wall 221, but are on inclined planes, helping better control the flowing direction of the high-temperature gas and improve the effect of the deflector cap 240 for cooling down and slowing down. The two fourth side walls 244 may alternatively be perpendicular to the outer wall 221. The two fourth side walls 244 are perpendicular to the outer wall 221 of the casing 220 of the battery pack 200. A structure design of the two fourth side walls 244 is simple and can be implemented by diverse processes with low costs. This improves the effect of the deflector cap 240 for cooling down and slowing down and reduces structural complexity of the battery pack 200.

In a possible implementation, one fourth side wall 244 is perpendicular to the outer wall 221. Only one fourth side wall 244 is disposed along the height direction of the battery pack 200, and a surface opposite the fourth side wall 244 along the height direction of the battery pack 200 is the vent of the deflector cap 240. The vent may face the ground or the sky. The fourth side wall 244, the first side wall 241, and the second side walls 242 function to resist the high-temperature gas released from the battery pack 200, to control the high-temperature gas to flow through the vent, implement directional pressure relief. In addition, the gas released through the deflector cap 240 is already cooled down and slowed down, causing no impacts on the surrounding environment.

In an embodiment, the deflector cap 240 may be a hemispherical cavity, as shown in a sectional view of the battery pack 200 in the z direction shown FIG. 14. The explosion-proof valve 230 and the deflector cap 240 are on the side wall of the casing 220 of the battery pack 200, and the periphery of the explosion-proof valve 230 is capped by the deflector cap 240. The deflector cap 240 includes a first side wall 241 and two third side walls 243. A surface of the first side wall 241 is a cambered surface, and both the two third side walls 243 are connected to the first side wall 241. The two third side walls 243 are fastened to the outer wall 221 of the casing 220 of the battery pack 200, and the two third side walls 243 of the deflector cap 240 may be welded to the outer wall 221 of the casing 220 through a welding process. Alternatively, a plurality of screw holes may be provided on the outer wall 221 of the casing 220 at positions corresponding to the two third side walls 243, and then the deflector cap 240 is fastened to the outer wall 221 of the casing 220 of the battery pack 200 by using screws. A plurality of vents may be provided on the first side wall 241 as vents of the deflector cap 240, and a sum of areas of the plurality of vents is greater than or equal to the flow area after the explosion-proof valve 230 is opened.

When the deflector cap 240 is a hemispherical cavity, FIG. 16 shows a manner of arranging the vents on the first side wall 241, and FIG. 17 shows a diagram of a spherical surface of the hemispherical deflector cap 240. The vents are arranged from a center to a periphery of the first side wall 241, and an area of a vent gradually increases. An area of a vent at the center of the first side wall 241 is the smallest, with least high-temperature gas, dust, and electrolyte passing through and slightest impacts on an environment directly opposite the side wall of the casing 220 of the battery pack 200. In addition, a distributed arrangement of vents can disperse the high-speed gas, reduce a speed of the gas, and further reduce an impact area of the gas, to prevent impacts on the surrounding environment of the battery pack 200.

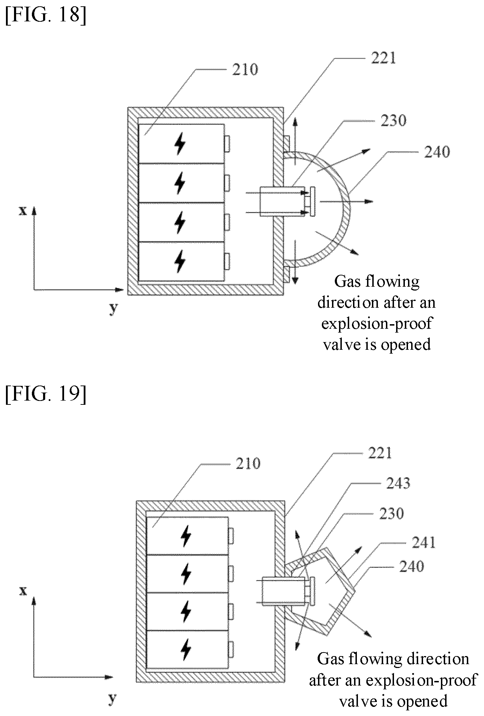

It should be understood that the two third side walls 243 may extend along a direction toward the explosion-proof valve 230, or may extend in a direction facing away from the explosion-proof valve 230, as shown in a sectional view of the battery pack 200 in the z direction shown in FIG. 18.

Alternatively, the deflector cap 240 may be a polyhedral cavity, as shown in a sectional view of the battery pack 200 in the z direction shown in FIG. 19. The deflector cap 240 includes four sequentially connected first side walls 241, two third side walls 243, and two fourth side walls 244 (not shown in the figure). The two fourth side walls 244 are opposite each other in the z direction, and the two third side walls 243 are configured to be fastened to the outer wall 221 of the casing 220 of the battery pack 200. A vent may be provided on at least one side wall in the four first side walls 241 or the two fourth side walls 244, or a side wall may be removed and used as the vent of the deflector cap 240.

To further enhance the effect of the deflector cap 240 for cooling down the high-temperature gas, the dust, and the electrolyte, the side wall of the deflector cap 240 may be designed as a hollow structure. To be specific, a flow channel is provided in the deflector cap 240, a coolant or cold air may flow in the flow channel to cool down the high-temperature gas, the dust, and the electrolyte released from the explosion-proof valve 230.

To further enhance the explosion-proof effect of the battery pack 200, the explosion-proof valve 230 is disposed in each of the cells 210. When thermal runaway occurs in the cell, both the explosion-proof valve 230 of the cell and the explosion-proof valve 230 of the battery pack 200 are opened, to release the high-temperature gas in the cell to the outside of the casing 220 of the battery pack 200, preventing spread and diffusion of the thermal runaway.

Further, the explosion-proof valve 230 of the cell may face the explosion-proof valve 230 of the battery pack 200, so that when thermal runaway occurs in the cell, a gas released from the cell directly flows from the explosion-proof valve 230 of the cell to the explosion-proof valve 230 of the battery pack 200. A flow path is shorter, and the high-temperature gas is rapidly exhausted out to prevent heat from diffusing to another cell.

To verify the effect of the deflector cap 240, a thermal runaway test is conducted on the battery pack 200 disposed with the deflector cap 240 and the explosion-proof valve 230. For a structure of a bottom surface of the deflector cap 240 provided with the vent, refer to the diagram of the structure of the battery pack 200 shown in FIG. 2 and the sectional view of the battery pack 200 in the y direction shown in FIG. 13.

### 1. Arrangement of a battery pack to be tested and test equipment

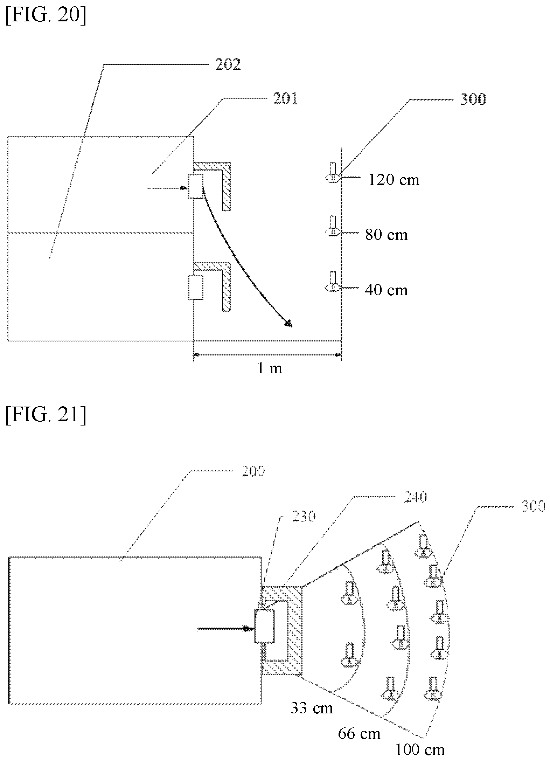

As shown in FIG. 20 and FIG. 21, two battery packs 201 and 202 are stacked. Temperature sensors 300 are separately disposed in a height direction (40 cm, 80 cm, and 120 cm) at a radius of 1 m with an explosion-proof valve 230 of the battery pack 201 as a center. Temperature sensors 300 are disposed on the ground on a side of the explosion-proof valve 230 of the battery pack 201, and the temperature sensors 300 are arranged in a fan. In addition, a temperature sensor 300 is correspondingly disposed inside the lower battery pack 202.

### 2. Test Method

Thermal runaway in the battery pack 201 is triggered by overcharging or heating, and temperatures of a surrounding environment of the battery pack 201 and the lower battery pack 202 are collected.

### 3. Test Result

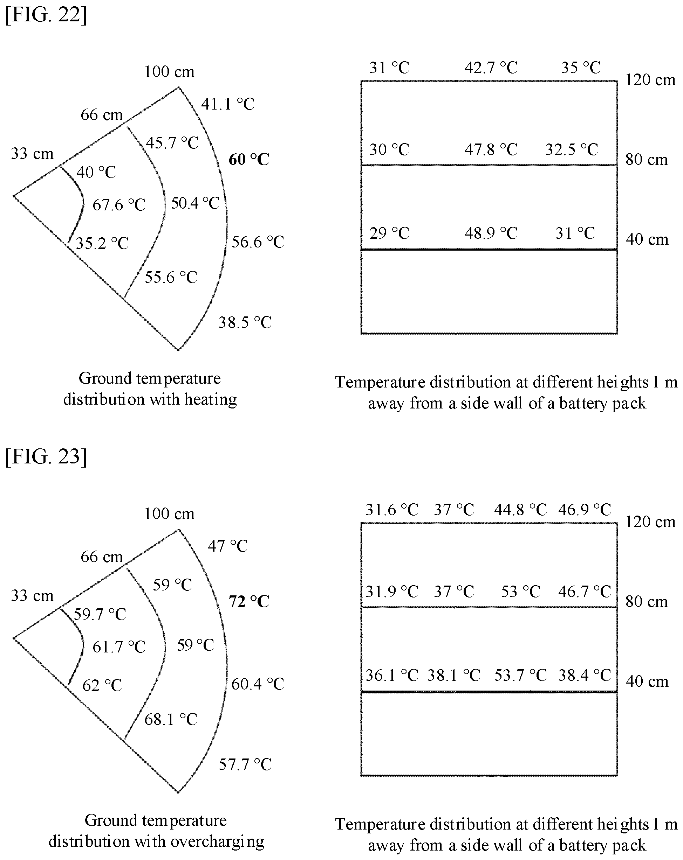

FIG. 22 shows temperature distribution of the surrounding environment of the battery pack 201 when thermal runaway in the battery pack 201 is triggered by heating, and FIG. 23 shows temperature distribution of the surrounding environment of the battery pack 201 when thermal runaway in the battery pack 201 is triggered by overcharging.

According to the test result shown in FIG. 22, in the heating scenario, when thermal runaway occurs in the battery pack 201, in the height direction one meter away from the battery pack 201, a highest temperature is 48.9 °C, and a highest ground temperature is 60 °C. According to the test result shown in FIG. 23, in the overcharging scenario, when thermal runaway occurs in the battery pack 201, in the height direction one meter away from the battery pack 201, a highest temperature is 53 °C, and a highest ground temperature is 72 °C. When thermal runaway occurs in a battery pack disposed with no deflector cap 240, a highest temperature one meter away from the battery pack 200 is 200 °C. The deflector cap 240 on a periphery of the explosion-proof valve 230 of the battery pack 201 can significantly reduce a temperature of a gas released from the battery pack 201 due to thermal runaway, effectively reduce impacts on the surrounding environment, and effectively prevent a safety accident. In addition, the explosion-proof valve 230 on the battery pack 201 with thermal runaway is not blocked, indicating that disposing the deflector cap 240 does not affect a pressure relief function of the explosion-proof valve 230. The explosion-proof valve 230 of the battery pack 202 below the battery pack 201 with thermal runaway functions normally, indicating that high-temperature gas, dust, and electrolyte released from the battery pack 201 with thermal runaway do not enter the deflector cap 240 below, and that a function of the explosion-proof valve 230 of the lower battery pack 202 is not affected. No electrolyte penetrates into the lower battery pack 202, and a highest temperature of the lower battery pack 202 is 90 °C, indicating that a function of the lower battery pack 202 is not affected either. Therefore, the deflector cap 240 capping the periphery of the explosion-proof valve 230 on the outer wall 221 of the battery pack 201 can effectively reduce a temperature of the gas released from the battery pack 201 due to thermal runaway and effectively prevent thermal runaway from diffusing to another battery pack 200. In this way, safety performance of an entire energy storage apparatus is improved.

Based on a same inventive concept, an embodiment of this application further provides an energy storage system. The energy storage system includes a plurality of battery packs 200 described above, and the plurality of battery packs 200 are stacked from bottom to top. An outer surface of a bottom wall of a casing 220 of one battery pack 200 is in contact with an outer surface of a top wall of a casing 220 of another battery pack 200, and openings of plurality of battery packs 200 all face a side surface of the energy storage apparatus. When a battery needs to be replaced or repaired, a cell 210 may be directly taken out from the opening facing the side surface, and the cell 210 can be replaced and repaired conveniently. The plurality of battery packs 200 are assembled by stacking up, and any quantity of battery packs 200 can be stacked one upon another based on an actual requirement, to increase or decrease a battery capacity and facilitate assembly. As the plurality of battery packs 200 are stacked in the energy storage system provided in embodiments of this application, any quantity of battery packs 200 can be stacked one upon another based on an actual requirement, to increase or decrease a battery capacity and facilitate assembly.

In an embodiment, both explosion-proof valves 230 and deflector caps 240 of the plurality of battery packs 200 face the side surface of the energy storage apparatus. When thermal runaway occurs in any battery pack 200, the explosion-proof valve 230 on the side wall of the casing 220 of the battery pack 200 is opened, and a high-temperature gas, dust, and electrolyte in the battery pack 200 are released from the explosion-proof valve 230 into the deflector cap 240. The deflector cap 240 cools down and slows down the high-temperature gas, the dust, and the electrolyte released from the battery pack 200, preventing the high-temperature gas, the dust, and the electrolyte from impacting a surrounding environment of the energy storage apparatus, and preventing a safety accident.

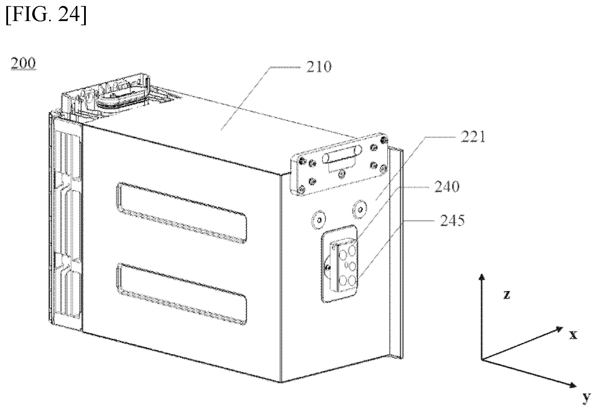

Based on a same inventive concept, an embodiment of this application further provides a battery pack 200. For a structure of the battery pack 200, refer to a diagram of a structure of the battery pack 200 shown in FIG. 24. The battery pack 200 includes a casing 220 and a plurality of cells inside the casing 220, an explosion-proof valve and a deflector cap 240 are disposed on an outer wall of the casing 220, a periphery of the explosion-proof valve is capped by the deflector cap 240, the deflector cap 240 includes one side wall opposite the outer wall of the casing 220, and one or more vents 245 are provided on the side wall. When thermal runaway occurs in the battery pack 200, the explosion-proof valve is opened, and a gas in the battery pack 200 is blasted into the deflector cap 240. The side wall of the deflector cap 240 cools down and slows down the gas to some extent, and then the gas is blasted through the one or more vents 245. A blasting direction of the gas is changed, to prevent the high-temperature gas from impacting a surrounding environment of the battery pack 200.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery pack, wherein the battery pack comprises a casing and a plurality of cells inside the casing, an explosion-proof valve and a deflector cap are disposed on an outer wall of the casing, and a periphery of the explosion-proof valve is capped by the deflector cap; and
the deflector cap is provided with one or more vents, wherein a range of an included angle A between an opening direction of at least one vent in the one or more vents and the outer wall is 0°≤A<90°.

2. The battery pack according to claim 1, wherein an area of the one vent or a sum of areas of the plurality of vents is greater than or equal to a flow area after the explosion-proof valve is opened, and the flow area is an area for gas to flow through after the explosion-proof valve is opened.

3. The battery pack according to claim 2, wherein the area of the one vent or the sum of the areas of the plurality of vents is one to five times the flow area after the explosion-proof valve is opened.

4. The battery pack according to claim 1, wherein the deflector cap comprises a plurality of side walls, and the one or more vents are provided on at least one side wall in the plurality of side walls.

5. The battery pack according to any one of claims 1 to 4, wherein the deflector cap is fastened to the outer wall.

6. The battery pack according to any one of claims 1 to 4, wherein the deflector cap is fastened to the explosion-proof valve.

7. The battery pack according to claim 4, wherein the deflector cap comprises one first side wall, one second side wall, and one third side wall, the first side wall, the second side wall, and the third side wall are sequentially connected, and are opposite and spaced from the explosion-proof valve; and
the third side wall is parallel to the outer wall, and the third side wall is fastened to the outer wall.

8. The battery pack according to claim 4, wherein the deflector cap comprises one first side wall, two second side walls, and two third side walls, the first side wall is opposite and spaced from the explosion-proof valve, the two second side walls are opposite each other, and both the two second side walls are connected to the first side wall; and
the two third side walls are parallel to the outer wall, the two third side walls are connected to the two second side walls respectively, and both the two third side walls are fastened to the outer wall.

9. The battery pack according to claim 8, wherein a direction along which the two second side walls are spaced from each other is perpendicular to a direction along which the first side wall is spaced from the explosion-proof valve.

10. The battery pack according to claim 8 or 9, wherein the deflector cap comprises one fourth side wall, the fourth side wall is connected to the first side wall, and the fourth side wall is connected to any one second side wall in the two second side walls.

11. The battery pack according to claim 10, wherein a length of the deflector cap in an extension direction of the outer wall is greater than or equal to a length of the explosion-proof valve in the extension direction of the outer wall.

12. The battery pack according to claim 10, wherein a projection, of the first side wall, on the outer wall covers the explosion-proof valve.

13. The battery pack according to claim 8 or 9, wherein the deflector cap comprises two fourth sidewalls, the two fourth side walls are opposite each other, both the two fourth side walls are connected to the first side wall, and both the two fourth side walls are connected to the two second side walls; and
the one or more vents are provided on at least one side wall in the side walls of the deflector cap, wherein the side walls comprise the first side wall, the two second side walls, and the two fourth side walls.

14. The battery pack according to claim 13, wherein the two fourth side walls are parallel.

15. The battery pack according to claim 13 or 14, wherein both the two fourth side walls are perpendicular to the outer wall.

16. The battery pack according to claim 10, wherein the fourth side wall is perpendicular to the outer wall.

17. The battery pack according to any one of claims 7 to 14, wherein the first side wall is parallel to the outer wall.

18. The battery pack according to any one of claims 1 to 6, wherein the deflector cap is a hemispheroid, the hemispheroid comprises one first side wall and two second side walls, the first side wall is connected to the two second side walls, the two second side walls are fastened to the outer wall, a surface of the first side wall is a cambered surface, and the vent is at least one vent provided on the cambered surface.

19. The battery pack according to claim 18, wherein an area of the at least one vent arranged from a center of the cambered surface to a periphery of the cambered surface gradually increases.

20. An energy storage apparatus, wherein the energy storage system comprises a plurality of battery packs according to any one of claims 1 to 19, and the plurality of battery packs are stacked.

21. The energy storage apparatus according to claim 20, wherein explosion-proof valves and deflector caps of the plurality of battery packs are all disposed on a side surface of the energy storage apparatus.

22. A battery pack, wherein the battery pack comprises a casing and a plurality of cells inside the casing, an explosion-proof valve and a deflector cap are disposed on an outer wall of the casing, a periphery of the explosion-proof valve is capped by the deflector cap, the deflector cap comprises one side wall opposite the outer wall of the casing, and one or more vents are provided on the side wall.
